# EUROPÄISCHE PATENTANMELDUNG

(11) **EP 4 235 834 A1**
(43) Veröffentlichungstag der Anmeldung: **30.08.2023**
(21) Anmeldenummer: 22158275.2
(22) Anmeldetag: 23.02.2022
(51) Int. Cl.: H01M 4/06, H01M 4/24, H01M 4/38, H01M 4/50, H01M 4/62, H01M 4/90, H01M 6/04, H01M 6/14, H01M 12/06

(54) **ELEKTROCHEMISCHE PRIMÄRZELLE SOWIE MEHRZELLIGE BATTERIE UND VERWENDUNG VON NANO-PARTIKULÄREN SILIZIUM-AGGLOMERATEN**

(71) Anmelder: Lang, Dr. Jürgen Erwin, 76229 Karlsruhe (DE)
(72) Erfinder: LANG, Jürgen, 76229 Karlsruhe (DE); MOUSSALLEM, Imad, 63457 Hanau (DE)
(74) Vertreter: Bendele, Tanja

(57) **Zusammenfassung**

Gegenstand der Erfindung ist eine elektrochemische Primärzelle mit einer Anode, einer Kathode, einem Elektrolyten sowie mindestens einem Separator, wobei die Kathode als Material vorzugsweise Mangandioxid und optional einen Kohlenstoff enthaltenden Leitfähigkeitsvermittler umfasst, wobei die Anode als Anodenmaterial Silizium umfasst, das Silizium in Form von Silizium-Partikeln vorliegt, und die Silizium-Partikel Silizium-Primärpartikel mit einer Partikelgröße zwischen 1 nm bis 3000 nm aufweisen, und die Silizium-Primärpartikel optional im Wesentlichen amorph sind. Des Weiteren umfasst die Erfindung eine mehrzellige Batterie mit mindestens zwei miteinander verbundenen in Serie geschalten Primärzellen sowie auch die Verwendung von Silizium als Anodenmaterial in Form von Silizium-Partikeln, die als Silizium-Primärpartikel mit einer Partikelgröße zwischen 1 nm bis 3000 nm vorliegen und Agglomerate und/oder Aggregate bilden, wobei das Anodenmaterial im geladenen Zustand kein Lithium umfasst und, wobei die Silizium-Primärpartikel optional im Wesentlichen amorph sind.

## Beschreibung

Gegenstand der Erfindung ist eine elektrochemische Primärzelle mit einer Anode, einer Kathode, einem Elektrolyten sowie mindestens einem Separator, wobei die Kathode als Material vorzugsweise Mangandioxid und optional einen Kohlenstoff enthaltenden Leitfähigkeitsvermittler umfasst, wobei die Anode als Anodenmaterial Silizium umfasst, das Silizium in Form von Silizium-Partikeln vorliegt, und die Silizium-Partikel Silizium-Primärpartikel mit einer Partikelgröße zwischen 1 nm bis 3000 nm aufweisen, und die Partikel optional im Wesentlichen amorph sind. Des Weiteren umfasst die Erfindung eine mehrzellige Batterie mit mindestens zwei mit einander verbundenen in Serie geschalteten Primärzellen sowie auch die Verwendung von Silizium als Anodenmaterial in Form von Silizium-Partikeln, die als Silizium-Primärpartikel mit einer Partikelgröße zwischen 1 nm bis 3000 nm vorliegen und Agglomerate und/oder Aggregate bilden, wobei das Anodenmaterial im geladenen Zustand kein Lithium umfasst und, wobei die Silizium-Partikel optional im Wesentlichen amorph sind.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es auf wirtschaftliche Weise, eine Silizium enthaltende galvanische Zelle bereitzustellen, die eine gute Leistungsdichte sowie eine hohe Angangsspannung bereitstellen kann. Des Weiteren bestand die Aufgabe eine Silizium enthaltende galvanische Zelle bereitzustellen, die vorzugsweise frei von Lithium ist, wobei vorzugsweise bedeutet frei von Lithium, dass der Gehalt an Lithium im geladenen Zustand unter 0,1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%. Vorzugsweise soll die galvanische Zelle Edukte und Reaktionsprodukte aufweisen, die aus Recyclingprozessen stammen, Nebenprodukte sind und/oder in Recyclingprozessen weiterverwendet werden können.

Überraschenderweise haben die Erfinder gefunden, dass spezifische Silizium-Partikel als aktive Komponente in einer galvanischen Zelle verwendet werden können und in einer einzelnen spezifischen elektrochemischen Primärzelle nennenswerte Leistungsdichten bis unerwartet hohe Leistungsdichten von größer gleich 3 mW/cm² erzielt werden können. Die höchsten Leistungsdichten konnten mit Fluorid enthaltenden Elektrolyten erzielt werden. Auch mit ionischen Flüssigkeiten konnten gute Resultate in Bezug auf die Leistungsdichten erzielt. Auch mit Ammoniumchlorid und Natriumcarbonat enthaltenden Elektrolyten konnten mit agglomerierten und/oder aggregierten Silizium-Primärpartikeln als Anodenmaterial gute Leistungsdichten gemessen werden. In allen Versuchen konnte mit Elektroruß oder elektrochemisch behandeltem bzw. hergestelltem Ruß und Leitruß die besten Leistungsdichten für Silizium enthaltende Primärzellen erhalten werden.

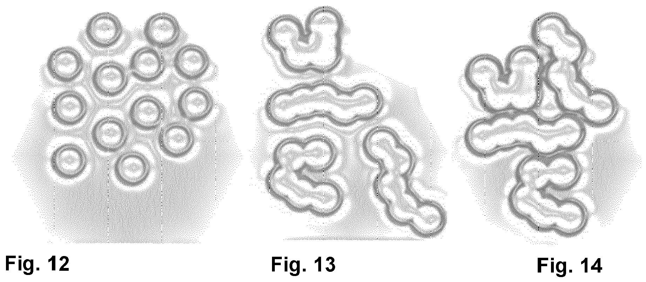

Unter agglomerierten Silizium-Primärpartikeln oder Agglomeraten von Silizium werden erfindungsgemäß Silizium-Primärpartikel verstanden, die sich im Wesentlichen an Ecken und Kanten berühren und nicht an den Flächen. Agglomerate (Figur 14) können beim Dispergieren in Aggregate (Figur 13) und die Silizium-Primärpartikel (Figur 12) zerkleinert werden. Des Weiteren werden unter Aggregaten (Figur 13) zusammengewachsene, aneinander geschmolzene oder zusammengelagerte Primärpartikel verstanden, die nur unter mechanischer Krafteinwirkung voneinander getrennt werden können.

Bevorzugte Primärzellen der Erfindung sind vorzugsweise frei von Lithium, wobei vorzugsweise wird unter frei von Lithium verstanden, dass der Gehalt an Lithium im geladenen Zustand in der Primärzelle, insbesondere umfassend die Anode, die Kathode und den Elektrolyten, kleiner gleich 1 Gew.-%, insbesondere kleiner gleich 0,1 Gew.-% in der Primärzelle beträgt, vorzugsweise beträgt der Gehalt an Lithium im Elektrodenmaterial der Anode im geladenen Zustand kleiner gleich 0,1 Gew.-%. Elektrochemische Primärzellen und insbesondere Anoden für elektrochemische Prozesse mit einem Lithiumgehalt unter 1 Gew.-%, vorzugsweise kleiner gleich 0,1 Gew.-%, gelten als frei von Lithium und werden erfindungsgemäß als reine Silizium-Zellen oder reine Silizium-Anoden bezeichnet.

Des Weiteren soll ein wirtschaftliches Kathodenmaterial bereitgestellt werden, das vorzugsweise eine physikalische Mischung von Mangandioxid (MnO₂) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Gegenstand der Erfindung ist somit mindestens eine elektrochemische Primärzelle, welche eine Anode, eine Kathode, einen Elektrolyten sowie mindestens einen Separator aufweist, wobei der Separator die Kathode und die Anode voneinander separiert, und die Kathode umfasst als Material Mangandioxid und optional einen Kohlenstoff enthaltenden Leitfähigkeitsvermittler, wobei die Anode als Anodenmaterial Silizium umfasst und, wobei das Silizium in Form von Silizium-Partikeln vorliegt und dabei die Silizium-Primärpartikel eine Partikelgröße zwischen 1 nm bis 3000 nm aufweisen, und die Primärpartikel optional im Wesentlichen amorph sind. Dabei ist es besonders bevorzugt wenn die Silizium-Partikel, und insbesondere die Silizium-Primärpartikel eine Kristallinität von kleiner gleich 20 %, insbesondere 12 % aufweisen, insbesondere eine Kristallinität kleiner gleich 2 % aufweisen. Silizium-Primärpartikel mit einer Kristallinität unter 12 %, vorzugsweise unter 2 % gelten als amorph. Vorzugsweise liegen die Silizium-Partikel in der Anode als Aggregate vor und optional ist der Gehalt an Lithium kleiner gleich 0.1 Gew.-% in Bezug auf den Siliziumgehalt der Anode von 100 Gew.-% der Primärzelle, wobei der Gehalt an Lithium bevorzugt im geladenen Zustand der Primärzelle kleiner gleich 0.1 Gew.-% beträgt.

Als im Wesentlichen amorph gilt ein Pulver, das röntgenamorph ist. Als röntgenamorph gilt vorzugsweise ein Pulver mit einer Kristallinität kleiner 20 %, bevorzugt kleiner 12 %, besonders bevorzugt kleiner gleich 2 %. Der Kristallinitätsgrad kann nach folgender Methode mittels XRPD ermittelt werden über die Formel % Kristallinität = (100 × A)/(A + B -C) mit A = gesamte Peakfläche der Reflexe der kristallinen Bestandteile des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diagramme des Si-Referenzstandards NIST 640 (Si-Standard = 100 % Kristallinität) ermittelt. Fläche B entspricht einem eingelegten Untergrundverlauf sowie dem konstanten Untergrund C. Berechnung (HighScore Plus Software). Si-Standard (Standard Reference Material 640d for X-Ray Metrology, David R. Black, Donald Windover, Albert Henins, David Gil, James Filliben and James P. Cline; National Institute of Standards and Technology, Gaithersburg, MD, 20899). In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph.* Kristallin: Kristall ist ein anisotroper, homogener Körper, der eine dreidimensional periodische Anordnung der Bausteine besitzt und ein XRPD mit klar definierten auflösbaren Reflexen besitzt.

Gleichfalls Gegenstand der Erfindung sind Primärzellen, in denen das Anodenmaterial Silizium-Partikel umfassend Silizium-Primärpartikel, Agglomerate aus Silizium-Primärpartikeln, Aggregate aus Silizium-Primärpartikeln und/oder Gemische davon umfasst, wobei insbesondere die Agglomerate und/oder Aggregate eine Größe von 10 nm bis 100 µm (Mikrometer) aufweisen. Bevorzugt sind Agglomerate und/oder Aggregate im Bereich von 100 nm bis 5 Mikrometer, insbesondere von 200 nm bis 2 Mikrometer, bevorzugt von 300 nm bis 1,5 Mikrometer und/oder von 400 nm bis 1 Mikrometer. Zugleich können die Silizium-Primärpartikel eine Partikelgrößenverteilung von 1 nm bis 15 nm, insbesondere von 50 bis 300 nm oder von 100 nm bis 300 nm aufweisen.

Batterieseparatoren in einer Alkali-Batteriezelle werden zum Trennen einer negativen Elektrode von einer positiven Elektrode verwendet, wenn sie in einem geeigneten Elektrolyten angeordnet sind. Neben der Trennung der Elektroden weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, Lingnocellulose, Cellulose und/oder Mikrozellulose basieren.

Die Coating- bzw. Überzugszusammensetzung des Separators umfasst beispielsweise eine Mischung aus einem polymeren Bindemittel, einem hydrolysierbaren polymeren Ester und inerten Füllstoffen. Ein geeignetes polymeres Bindemittel ist Ethylen-Propylen-Kautschuk. Ein geeigneter hydrolysierbarer Ester ist ein filmbildendes Polyacrylat. Bei den inerten Füllstoffen kann es sich unter anderem um ein in Alkali unlösliches Pigmentmaterial einschließlich Kaolin, Metalloxiden und/oder Titanaten handeln. Der auf diese Weise hergestellte bzw. beschichtete Separator in den alkalischen Elektrolyten eingetaucht wird, reagiert der hydrolysierbare polymere Ester chemisch mit dem Elektrolyten unter Bildung eines polymeren Salzes und eines Alkohols. Der Alkohol geht in Lösung. Das Salz, das während der Hydrolyse gebildet wird und in dem Überzug zurückgehalten wird, dehnt sich aus durch weiteres Eindringen des Elektrolyten. Diese Ausdehnungskräfte der Polymerketten des Bindemittels führen zu einer weiteren Ausdehnung und zu einer Vergrößerung des intermolekularen Abstandes. Die in einem größeren Abstand voneinander angeordneten intermolekularen Ketten des polymeren Bindemittels ergeben eine Gesamtzunahme der Porosität des Filmüberzugs. Die daraus resultierende Zunahme der Porosität des Überzugs erlaubt eine schnellere Diffusion der Elektrolyt-Ionen durch den Separator, während sie noch eine wesentliche Sperrschicht (Sperre) für die von den Elektroden emittierten großen Ionen darstellt.

Ferner ist es bevorzugt, dass das Anodenmaterial Silizium-Partikel sowie Leitfähigkeits-vermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis 100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Silizium-Partikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-% beträgt, insbesondere des Anodenmaterial ohne Elektrolyt, d.h. trockenes Anodenmaterial. Das Anodenmaterial kann in einer Primärzelle mit Luftkathode oder zusammen mit einer Kathode in einem in einem hermetisch geschlossenen Batteriegehäuse verwendet werden.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luftkathode und die Kathode umfasst Manganoxid, insbesondere ein Manganoxid, das kein Mangandioxid ist und optional Mangandioxid, Platin, Platin-Basis, Nickel-Kobalt-Cyanide oder Silber als Katalysator im Kathodenmaterial.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Die Kathode umfasst vorzugsweise als Material, d.h. als Kathodenmaterial oder als Katalysator im Kathodenmaterial zur Beschleunigung der Löslichkeit von Sauerstoff, Mangandioxid. Ein bevorzugtes Kathodenmaterial für eine Kathode in einer Primärzelle mit Luftkathode umfasst vorzugsweise Manganoxid, und optional Manganoxid, sowie Silber als Katalysator. Ein besonders bevorzugtes Kathodenmaterial, insbesondere für eine Primärzelle mit Luftkathode, weist eine hydrophobe Kathode auf, deren Kathodenmaterial eine Mischung aus Mangan(di)oxid, d.h. Manganoxid und/oder Mangandioxid, vorzugsweise einer durchschnittlichen Partikelgröße von kleiner gleich 10 µm (Mikrometer), insbesondere elektrolytisches Gamma-Mangandioxid, einen Leitfähigkeitsvermittler und einen polymeren halogenierten Kohlenwasserstoff, insbesondere einen polymeren fluorierten Kohlenwasserstoff, umfasst, insbesondere einen Polytetrafluorethylen. Die Mischung kann in Platten gepresst, getrocknet werden. Dabei wird vorzugsweise in der Primärzelle auf die der Luft ausgesetzten Kathodenseite ein mikroporöser, hydrophober Film, beispielsweise aus einem polymeren fluorierten Kohlenwasserstoff, aufgebracht.

Ein besonders bevorzugtes Kathodenmaterial der Kathode, insbesondere für eine Kathode in einem hermetisch geschlossenen Batteriegehäuse, umfasst zu 75 bis 85 Gew.-% Mangandioxid und zu 15 bis 25 Gew.-% einen Kohlenstoff enthaltenden Leitfähigkeitsvermittler, wobei die Gesamtzusammensetzung des Kathodenmaterials 100 Gew.-% beträgt. Das Kathodenmaterial umfasst vorzugsweise noch keinen Elektrolyten oder ist trockenes Kathodenmaterial.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Entsprechend einer bevorzugten Ausführungsvariante umfasst das Silizium, insbesondere die Silizium-Partikel, bevorzugt die amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen, insbesondere größer gleich 1 Element der 15. Hauptgruppe auf 10⁴ Silizium-Atome und/oder größer gleich 1 Element der 13. Hauptgruppe auf 10⁴ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel, des Anodenmaterials Dotierstoffe, wobei die Dotierstoffe größer gleich 10² Atome (ca. 100 Gew.-ppm, abhängig von Atomgewicht des Dotierstoffes) der 15. Hauptgruppe auf 10⁶ Silizium-Atome und/oder größer gleich 10² Atome der 13. Hauptgruppe auf 10⁶ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 2 10² Atome der 15. Hauptgruppe auf 10⁶ Silizium-Atome größer gleich 2 10² Atome der 13. Hauptgruppe auf 10⁶ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10⁵ Atome der 15. Hauptgruppe auf 10⁶ Silizium-Atome und/oder größer gleich 10⁵ Atome der 13. Hauptgruppe auf 10⁶ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10¹⁹ Atome der 15. Hauptgruppe auf 10²² Silizium-Atome und/oder größer gleich 10¹⁹ Atome der 13. Hauptgruppe auf 10²² Silizium-Atome umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe ganz besonders bevorzugt mit größer gleich 10²¹ Atomen/cm³ vorliegt und ausgewählt aus mindestens einem Elektronendonator und Elektronenakzeptor ist. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann das Silizium der Anode Teil eines mit Silizium beschichteten Elektrodenmaterials sein (Siliziumfolie) wobei das Silizium einen Gehalt an Bor von 10 ppm-Gew bis 1,8 Gew.-% in Bezug auf den Gesamtgehalt von 100 Gew.-% des Anodensiliziums aufweisen.

Gegenstand der Erfindung ist eine Primärzelle umfassend Silizium-Partikel, die einen Gehalt an Bor von 10 Gew.-ppm bis 1,8 Gew.-% aufweisen.

Zur Herstellung einer Anode oder Kathode werden jeweils ein Leitfähigkeitsvermittler sowie Silizium-Partikel zur Herstellung der Anode und Mangandioxid zur Herstellung der Kathode und optional ein Bindemittel, wie ein polymerer fluorierter Kohlenwasserstoff, gemischt und optional getrocknet. Vorzugsweise wird eine homogene Partikelgröße von kleiner gleich 10 Mikrometer bis 5 nm eingestellt und die Mischung zu einer Anode(nplatte) oder Kathode(nplatte) verpresst.

Nach einer weiteren Alternative weist die Primärzelle an der Luftkathode einen Lufteinlass auf, der eine Gas durchlässige Membran sein kann. Bevorzugt ist eine Membran aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine Gas durchlässige Membran, ein metallisches Netz zur Stromleitung und mindestens einen Katalysator, insbesondere einen porösen Katalysator. Die Gas durchlässige Membran ist vorzugsweise für Kohlendioxid undurchlässig und für Sauerstoff und optional Stickstoff durchlässig.

Ein bevorzugter Anteil an Bindemittel im Elektrodenmaterial liegt im Bereich von größer 20 bis kleiner 40 Gew.-%, vorzugsweise 22 Gew.-% bis 38 Gew.-%, in der Gesamtzusammensetzung des Kathodenmaterials oder des Anodenmaterials.

In weiteren Alternativen kann das Kathodenmaterial des Weiteren als Additive mindestens ein Additiv umfassen ausgewählt aus Bi₂O₃, PbO₂, SnO₂, Bi₂O₃•3ZrO₃ und K₂Cr₂O₇, wobei das Additiv zu 0,1 bis 10 Gew.-% im Kathodenmaterial vorliegt und Mangandioxid, der Leitfähigkeitsvermittler sowie optional ein Bindemittel auf 100 Gew.-% in der Gesamt-zusammensetzung des Kathodenmaterials vorliegen. Ist die Kathode eine Luftkathode kann das Kathodenmaterial ggf. zusätzlich Silber als Katalysator umfassen, insbesondere nanopartikuläre Silberartikel.

Dabei ist es weiter besonders bevorzugt, wenn die Anode, insbesondere das Anoden-material, insbesondere im geladenen Zustand der Primärzelle, kein Lithium umfasst, vorzugsweise keine Lithium-Ionen, im Konzentrationsbereich von größer gleich 1000 Gew-ppm, größer gleich 10 Gew.-ppm aufweist. Besonders bevorzugt weist das Anodenmaterial kleiner 1 Gew.-ppm Lithium-Atome auf. Vorzugsweise weist das Anodenmaterial kleiner 10²¹ Lithium-Atome/cm³ Silizium-Partikel auf. Des Weiteren ist es bevorzugt, wenn im Elektrolyten die Konzentration an Lithium, insbesondere Lithium-Ionen, kleiner gleich 1000 Gew.-ppm, insbesondere kleiner gleich 100 Gew.-ppm, bevorzugt kleiner gleich 10 Gew.-ppm beträgt.

Nach einer weiteren Ausführungsform ist es bevorzugt, wenn die Primärpartikel der Silizium-Partikel Agglomerate und/oder Aggregate oder Gemische davon bilden und vorzugsweise in einem porösen Silizium-Netzwerk angeordnet sein können, insbesondere können die Agglomerate, Aggregate oder Gemische dieser mechanisch zu einem porösen Silizium-Netzwerk verhakt sein. Insoweit kann das Anodenmaterial besonders bevorzugt ein poröses Silizium-Netzwerk aus Silizium-Primärpartikeln, Agglomeraten aus Silizium-Primärpartikeln, Aggregaten aus Silizium-Primärpartikeln und/oder Gemischen davon sein.

Dabei ist es besonders bevorzugt, wenn die Silizium-Partikel, insbesondere die Silizium-Primärpartikel, im Wesentlichen amorph (röntgenamorph) sind, da auf diese Weise sichergestellt wird, dass in dem Elektrolyten eine gleichmäßige Auflösung der Silizium-Partikel gewährleistet ist. Bei im Wesentlichen kristallinem Silizium würde die Auflösung im Elektrolyten anisotrop erfolgen. Amorphes Silizium wird isotrop aufgelöst, so dass amorphes Silizium eine höhere Energiedichte liefern kann. Beispielsweise ist in alkalischen Ätzmitteln die Ätzrate für die (111)-Richtungen eines Siliziumkristalls ungefähr zwei Größenordnungen kleiner als die jeder anderen Richtung. Die (100)-orientierten Flächen des Siliziumkristalls werden anderthalb mal so schnell geätzt wie die (110)-orientierten Flächen. Gleichfalls können dotierte, amorphe Silizium-Partikel eingesetzt werden. Ist die Dotierung von p-Typ Silizium-Partikeln größer als > 10¹⁹ je cm³, wird die Ätzrate herabgesetzt, da gilt, je höher die Dotierrate desto geringer die Ätzrate. Insofern ist über die Dotierung in amorphen Silizium-Partikeln die Leistungsdichte auch über die Ätzrate einstellbar.

Unter amorphen Silizium-Primärpartikeln werden Silizium-Primärpartikel, in der Regel in Form eines Pulvers oder in einer festen Zusammensetzung verstanden, die (Silizium-Primärpartikel) röntgenamorph vorliegen und optional partikulärdispers in eine Hilfsstoffmatrix z.B. Ruß eingebettet sein können. Dabei bedeutet Röntgenamorph, dass dem Röntgensignal" entsprechend den Haupt-Peaks: 28.5° (111) 47.4°(220) 56.0° (311) 69.4° (400) maximal weniger als 10% der Signalamplituden bezogen auf die sogenannte "fcc Structure" des Siliziums (JCPDS card: 00-027-1402) erreichen.

Erfindungsgemäßes Anodenmaterial umfasst keine Silicide. Unter Siliciden werden intermetallische Verbindungen mit einem stöchiometrischen Anteil an mindestens einem zweiten Metall verstanden. Silicide weisen eine homogene chemische Verbindung aus zwei oder mehr Metallen mit Gitterstrukturen, die sich von denen der konstituierenden Metalle unterscheiden, auf. Des Weiteren weist das Anodenmaterial keine klassische Legierung aus mindestens zwei Elementen auf, die gemeinsam das metalltypische Merkmal des kristallinen Aufbaus mit Metallbindung aufweisen, da die Silizium-Partikel vorzugsweise im Wesentlichen amorph (röntgenamorph) sind.

Die erfindungsgemäße elektrochemische Primärzelle ist keine Lithium-Ionen Batterie. Des Weiteren umfasst das Anodenmaterial keine Lithium-Interkalationsverbindung. Erfindungsgemäß umfasst das Kathodenmaterial kein Lithium-Metalloxid. Ebenso umfasst die Primärzelle keine Lithium-Salze.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe mit größer gleich 10²¹ Atomen/cm³ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe Phase vor.

Entsprechend einer Ausführungsform weisen die Silizium-Primärpartikel im Wesentlichen eine Partikelgröße von 5 bis 500 nm auf, insbesondere von 5 bis 20 nm, vorzugsweise von 5 bis 15 nm, oder in ebenso bevorzugten Alternativen weisen die Silizium-Primärpartikel Partikelgrößen von 20 bis 200 nm oder von 70 bis 350 nm, insbesondere von 100 bis 300 nm auf.

Ferner ist es bevorzugt, wenn die Silizium-Primärpartikel in Form von Agglomeraten und/oder Aggregaten aus den Primärpartikeln vorliegen, wobei die Agglomerate und/oder Aggregate eine Partikelgröße von 100 nm bis 3 µm aufweisen, insbesondere von 100 nm bis 2000 nm, bevorzugt von 150 bis 1000 nm oder von 400 bis 1000 nm. Die vorgenannten Anordnungen können auch als Nanodrähte oder Nanonetzwerk angesehen werden. In einer weiteren Alternative liegen die Silizium-Partikel im Wesentlichen in Form von Agglomeraten von Silizium Primärpartikeln und/oder Aggregaten von Silizium-Primärpartikeln oder Gemischen dieser vor, wobei die Agglomerate und/oder Aggregate eine Größe von 100 bis 3000 nm aufweisen, insbesondere von 100 bis 2500 nm, vorzugsweise von 100 nm bis 1500 nm, weiter bevorzugt sind 150 bis 1000 nm, 400 bis 1000 nm oder 200 bis 2000 nm.

Die erfindungsgemäßen Silizium-Primärpartikel weisen vorzugsweise eine Oberfläche von 10 bis 500 m²/g auf, insbesondere von 10 - 100 m²/g, vorzugsweise mit einer Primärpartikel-größe von etwa 10 nm im Mittel mit plus/minus 9 nm. Des Weiteren beträgt vorzugsweise die Oberfläche der Agglomerate und/oder Aggregate von 10 bis 80 m²/g.

Die Kathode und/oder die Anode weisen vorzugsweise eine Porosität auf, die bestimmt wird über Dichtemessung. Vorzugsweise beträgt die Porosität der Kathode und/oder der Anode von 8 bis 78 Vol.-% in Bezug auf das Gesamtvolumen der Kathode von 100 Vol.-%, bevorzugt von 14 bis 58 Vol.-%, besonders bevorzugt von 25 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentuales Volumen des geometrischen Gesamtvolumens der Kathode oder der Anode. Somit können die über die Porosität gebildeten Zwischenräume teilweise oder vollständig mit Elektrolyt gefüllt sein.

Porosität der Anode (Volumendichte Anodenmaterials): Siliziumdichte zwischen 0,1 bis 2,3 g/cm³.

Nach gleichfalls bevorzugten Alternativen kann das Gewichtsverhältnis von Mangandioxid im Kathodenmaterial zum Elektrolyten von 2,2 bis 2,9 betragen. Alternativ oder gleichzeitig kann das Gewichtsverhältnis der Silizium-Partikel im Anodenmaterial zum Elektrolyt von 0,6 bis 1,7 betragen.

Der Separator kann umfassen Filterpapier, polymere Membran, metallische Membran, keramische Membran, Membran aus Hybridmaterial. Eine polymere Membran kann vorzugsweise als Material Polyethylen, Polypropylen oder ein inertes Polymer oder Co-Polymer umfassen. Bevorzugt sind mikroporöse Polypropylenfilme, insbesondere einer Stärke von 0,028 mm bis 0,1 mm, bevorzugt von 0,038 mm bis 0,75 mm, wobei vorzugsweise die Porosität 45 Vol.-% bis 90 Vol.-%, insbesondere von 50 bis 80 Vol.-%, bevorzugt von 55 bis 70 Vol.-% in Bezug auf das Gesamtvolumen der Membran beträgt.

Nach einer weiteren bevorzugten Ausführungsform ist die elektrochemische Primärzelle eine basische Batterie oder eine Alkali-Batterie. Vorzugsweise ist der Elektrolyt der elektro-chemischen Primärzelle ausgewählt aus:
a) einer wässrigen, alkalische Salze enthaltenden fluiden Zusammensetzung, oder einer basischen, fluiden Zusammensetzung umfassend Na₂CO₃, oder
b) einer wässrigen oder nicht-wässrigen Fluorid-Anionen (F⁻) enthaltenden fluiden Zusammensetzung, oder
c) einer wässrigen Fluorid-Anionen (F-) enthaltenden Zusammensetzung mit einem Gehalt an ungelöstem Fluorid oder enthaltend eine Interkalationsverbindung, die Fluoride enthält, insbesondere umfasst die Zusammensetzung mindestens ein Salz ausgewählt aus MnF₂, NH₄F, KF, wobei MnF₂ ein Feststoff mit einer Löslichkeit in Wasser ist, oder
d) einer nicht wässrigen Fluorid-Anionen enthaltenden Zusammensetzung umfassend mindestens eine ionische Flüssigkeit, wie Ethyl-Methyl-Imidazolium-Kationen und Fluorid-Anionen umfassend HF, Ethyl-Methyl-Imidazolium-Tetrafluoroborat, optional in Gegenwart von weiteren Salzen von Fluorid-Anionen, wie NH₄F.

In weiteren zweckmäßigen Ausführungsformen kann der fluide Elektrolyt auch wasserfreie, protische Lösungsmittel umfassen. In weiteren zweckmäßigen Ausführungsformen kann der fluide wässrige Elektrolyt auch Puffer umfassen, wie Kohlensäure-Silicat-Puffer (pH 5,0 bis 6,2; schwach sauer) oder Ammoniumchloride (pH = 5,5). Ferner kann in bevorzugten Ausführungsformen der fluide Elektrolyt auch Alkalifluoride, wie KF, im Gemisch mit Ammoniumfluorid umfassen (KF, pH = 8-9, NH₄F, pH = 6). In alternativen Ausführungsformen kann es bevorzugt sein, dass der Elektrolyt anorganische Salze umfasst und, insbesondere einen pH-Wert von 2 bis 9,5 aufweist, bevorzugt von 2 bis 6, weiter bevorzugt von 3 bis 6. Optional kann der Elektrolyt zudem einen Puffer und/oder ein Puffersystem enthalten. Ein Kohlensäure-Silicat-Puffer macht die Zelle robust gegenüber einer CO₂ Absorption.

In besonders bevorzugten Ausführungsformen umfasst der Elektrolyt, organische oder anorganische Salze von Halogenid-Anionen, insbesondere von Fluoriden oder Chloriden. Des Weiteren umfasst der Elektrolyt vorzugsweise eine wässrige Zusammensetzung umfassend Hydroxid-Anionen, Carbonat-Anionen, wie in Na₂CO₃, oder Halogenid-Anionen, insbesondere Fluorid-Anionen und/oder Chlorid-Anionen. Bevorzugt sind eine wässrige Hydroxid-Lösung oder eine wässrige Fluorid-Anionen enthaltende Lösung oder Suspensionen.

Ferner ist es entsprechend weiterer Ausführungsformen bevorzugt, wenn der wässrige Elektrolyt mindestens ein Salz ausgewählt aus Ammonium-Salze der Halogenide, Ammonium-Salze der Carbonate, Ammoniumhydroxid, Alklihalogenide, Erdalkalihalogendie, Alkalicarbonat, Erdalkalicarbonat, Halogenide der Seltenen Erden, Fluoride der Seltenen Erden, besonders bevorzugt Mangansalzen, wie Mangandifluorid und/oder Mangandichlorid, Ammonium-Salzen, wie Ammoniumhalogenide, insbesondere Ammonium-fluorid und/oder Ammoniumchlorid, Alkalihydroxide, wie Kaliumhydroxid und/oder Natrium-hydroxid, Alkalihalogenide, vorzugsweise Alkalifluoride, wie Natriumfluorid und/oder Kalium-fluorid, organische Carbonsäuren und/oder deren Salze, wie Zitronensäure und/oder Salze von Carbonsäuren umfasst. Des Weiteren kann der Elektrolyt Salze von Seltenerden-Metallen, wie Fluoride von Seltenerden-Metallen umfassen. Ferner kann der Elektrolyt Carbonate von Alkali- und/oder Erdalkalimetallen umfassen. In einer besonders bevorzugten Alternative umfasst der Elektrolyt Salze, die ausgewählt sind aus Mangandifluorid, Mangandichlorid und/oder Ammoniumfluorid und optional Kaliumfluorid.

Es hat sich als vorteilhaft erwiesen, wenn der Elektrolyt ein Netzmittel zur Verbesserung der Benetzungseigenschaften umfasst. Bevorzugte Netzmittel umfassen Tenside, wie anionische Tenside, kationische Tenside, amphotere Tenside, organische Lösemittel, wie Alkohol, Keton, Ether, Polyether, wie Polyethylenoxid und/oder Polypropylenoxid. Das Netzmittel im Elektrolyten kann vorzugsweise mit einem Gehalt von 1 bis 1000 ppm.-Gew. in Bezug auf die Gesamtzusammensetzung des Elektrolyten von 100 Gew.-% vorliegen.

Eine bevorzugte Zusammensetzung eines wässrigen Elektrolyten umfasst 2 bis 50 Gew.- % mindestens eines Salzes, insbesondere eines anorganischen Salzes, insbesondere 18 bis 22 Gew.-% mindestens eines anorganischen Salzes oder einer Mischung von mindestens zwei anorganischen Salzen und 50 bis 98 Gew.-% Wasser, insbesondere 78 bis 82 Gew.-% Wasser, und optional Additive auf die Gesamtzusammensetzung von 100 Gew.-% des wässrigen Elektrolyten. Bevorzugt kann eine Mischung zweier anorganischer Salze im Elektrolyten vorliegen, die zu 2 bis 15 Gew.-% eines Salzes sowie 15 bis 25 Gew.-% eines anderen Salzes in der Gesamtzusammensetzung von 100 Gew.-% des wässrigen Elektrolyten vorliegen.

Ein besonders bevorzugtes Kathodenmaterial der Kathode umfasst zu 70 bis 95 Gew.-% als Kathodenmaterial Mangandioxid, insbesondere Battery Grade und bevorzugt einer Partikel-größe von kleiner gleich 10 Mikrometer, und einen Kohlenstoff enthaltenden Leitfähigkeits-vermittler, insbesondere von 5 bis 30 Gew.-% Leitfähigkeitsvermittler, und optional weitere Additive auf 100 Gew.-% des Kathodenmaterials. Der Leitfähigkeitsvermittler ist vorzugs-weise ein Kohlenstoff enthaltender Partikel, Mischung dieser oder eine Kohlenstoff enthaltende Paste.

Der Kohlenstoff enthaltende Leitfähigkeitsvermittler umfasst besonders bevorzugt
i) Kohlenstoff enthaltende Partikel, die umfassen Ruß, Leit-Ruß, elektrochemisch hergestellten Ruß, Elektroruß, Aktivkohle, Graphit, Graphen und/oder eine Mischung davon, und/oder
ii) eine Kohlenstoff enthaltende Paste, die elektrisch leitfähige Polymere, die Heteroatome N, O und/oder S umfassen können, wie Polyanilin oder Graphen.

Es wurde gefunden, dass Elektroruß als Leitfähigkeitsvermittler wirksamer ist als Graphitpulver. Der hinreichende Anteil von Elektroruß im Anodenmaterial liegt vorzugsweise im Bereich von 50 bis 90 Gew.-% in Bezug auf die Gesamtzusammensetzung. Mit einer zwei Zellen umfassenden Batterie mit 16 cm² aktiver Elektrodenfläche könnte bereits eine Leistung ausreichend für den Betrieb eines kleinen Lüfters bereitgestellt werden.

In einer besonderen Variante der elektrochemischen Primärzelle liegt an der Kathode und/oder Anode vorzugsweise ein Druck von 0,01 bis 10 MPa an, bevorzugt von 0,5 bis 5,0 MPa, um das Pulvermaterial zu verdichten und den Innenwiderstand der Elektroden auf weniger 10 Ohm/cm zu reduzieren.

Gleichfalls Gegenstand der Erfindung ist eine mehrzellige Batterie wobei die Batterie mindestens zwei bis 15.000, insbesondere 3 bis 500, bevorzugt 4 bis 100, mit einander verbundene Primärzellen umfasst, vorzugsweise sind von den zwei bis 15.000 mit einander verbundenen Primärzellen 4 bis 100 in Serie, die weiteren entsprechend parallel geschaltet. Die Batterie wird definiert nach der DIN-Norm 40729.

Ebenso ist Gegenstand der Erfindung die Verwendung von Silizium als Anodenmaterial in Form von Silizium-Partikeln, insbesondere in Primärzellen, die als Silizium-Primärpartikel mit einer Partikelgröße zwischen 1 nm bis 3000 nm vorliegen und, insbesondere bilden die Silizium-Primärpartikel Agglomerate und/oder Aggregate oder Mischungen dieser, wobei die Silizium-Partikel, insbesondere die Silizium-Primärpartikel, optional im Wesentlichen amorph sind und das Anodenmaterial im geladenen Zustand kein Lithium umfasst. Vorzugsweise umfasst das Anodenmaterial im geladenen Zustand keine Lithium-Ionen im Konzentrationsbereich vom größer gleich 10000 Gew.-ppm, bevorzugt von größer gleich 1000 Gew.-ppm, besonders bevorzugt von größer gleich 100 Gew.-ppm, vorzugsweise von größer gleich 10²⁰ Lithium-Atome/cm³.

Des Weiteren weist der Elektrolyt vorzugsweise keine Lithium-Ionen mit einer Konzentration im Elektrolyten im Bereich oberhalb von 10000 Gew.-ppm auf, insbesondere von 1000 Gew.-ppm, bevorzugt von 100 Gew.-ppm auf.

### Ausführungsbeispiele:

Die nachfolgenden Tabellen stellen die verwendeten Proben von Silizium-Partikeln und des Leitfähigkeitsvermittlers dar.

**Tabelle 1: Röntgenamorphe Silizium-Partikel**

| **Silizium-Partikel** | Primärpartikel [nm] | Agglomerate **und/oder Aggregate** [nm] | Dotierung | Si [Gew.-%] |
|---|---|---|---|---|
| **A** | 5-15 | 150-1000 | < 0,1 Gew.-ppm Intrinsischer Halbleiter | 99,99999 (electronic grade) |
| **B** | 100-300 | 200-2000 | < 10 Gew-ppm | Solar-grade 99,999 |
| **C** | 100-300 | 400-1000 | 1 Gew.-% Intrinsischer p-Leiter | 98,9 |
| **D** | 100 - 300 | 400 - 1000 | 1,8 Gew.-% Bor (5·10¹⁹/cm³) | 98,19 |

**Tabelle 2: Leitfähigkeitsvermittler enthaltend Kohlenstoff enthaltende Partikel**

| Kohlenstoff enthaltende Partikel | Kohlenstoff enthaltende Partikel | Partikelgröße [nm] | Agglomerate und/oder Aggregate [nm] | Dotierung |
|---|---|---|---|---|
| Vulcan-XC72R (Elektroruß) | | 20 bis 40 oder | 350 bis 1500 | < 100 Gew.-ppm n-Donoren und p-Akzeptoren |
| | | 25 bis 80 | 350 bis 1500 | |
| Graphit (Naturgraphit vermalen) | ca. 20% Fettanteil | 16000-63000 | Flocken, flockig | < 1 Gew.-% |

Mit den Siliziumpartikeln und den Kohlenstoffpartikeln wurden Elektrodenpasten hergestellt, die alternativ mit Bindemittel versetzt gepresst werden können.

### Batterieversuche

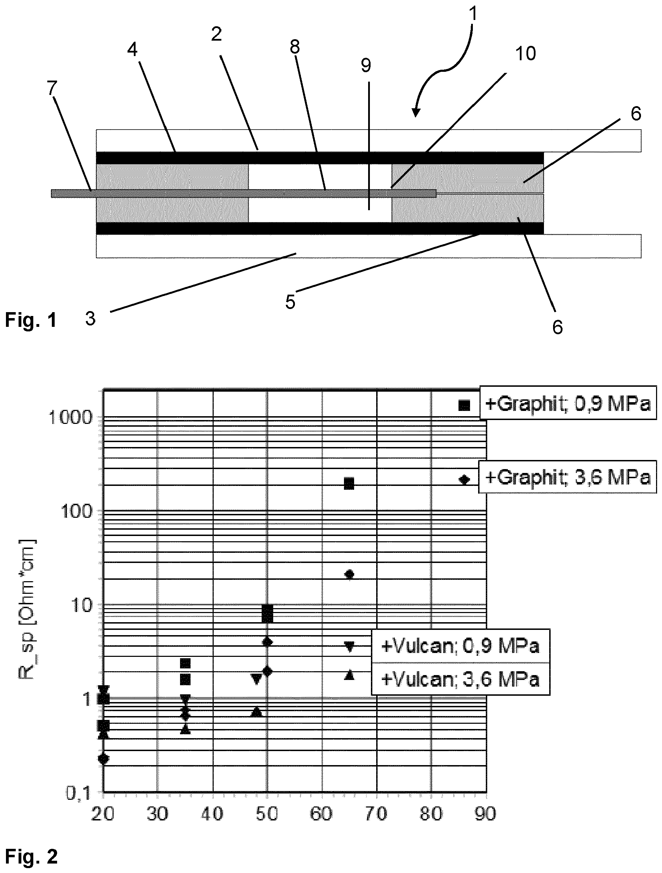

Der Aufbau aller getesteten Primärzelle(n) **1** erfolgte gemäß **Figur 1** Kontaktelektroden **2**, **3**; Graphitfolie **4**, **5**; Silikonscheibe **6** mit zentraler Bohrung Durchmesser 24 mm (4,5 cm²) für Anodenmaterial **8**, Kathodenmaterial **9**; Separator **7** (Filtrierpapier), Bohrung **10** in Silikonscheibe **6** zur Aufnahme des Elektrodenmaterials.

In die Bohrung **10** einer Silikonscheibe **6** auf einer Grafitfolie **5** auf der Kontaktelektrode **3** wurde Kathodenmaterial (beispielsweise 90 % MnO₂ + 10 % Graphit + Elektrolytlösung) eingebracht und der Separator **7** aufgelegt. Auf einer Seite ragt der Separator **7** heraus, damit beim Zusammenpressen überschüssige Elektrolytlösung heraustreten kann. Die obere Silikonscheibe **6** wird aufgelegt und in die Bohrung das jeweilige Anodenmaterial (als Anodenpaste) eingefüllt, und die Graphitfolie **4** und Kontaktelektrode **2** aufgelegt und mit 900 N (entspr. 20 bar bei 4,5 cm²) zusammengepresst. Die Kraft verteilt sich über die Elektrodenpasten und Silikonscheiben.

Mit einer Primärzelle gemäß obigem Primärzellenaufbau kann an den Elektroden eine Spannung U gemessen werden. Im Zuge von Performancetests wird alle 30 Sekunden die Strombelastung (I) erhöht.

### Beispiel 1:

Die Spannung einer Versuchszelle mit Silizium- und Kohlenstoff-Partikeln als Anodenmaterial gemäß Tabelle 1 und 2 mit Siliziumpartikel B 80 Gew.-% und 20 Gew.-% Graphit und einer Kathode bestehend aus 90 mol-% MnO₂ und 10 mol-% Graphit lag mit wässriger, 20 mol-%iger Ammoniumchloridlösung (NH₄Cl) als Elektrolyt zu Beginn bei rund 400 mV. Wird das Anodenmaterial Silizium gegen Zinkpulver (battery grade) getauscht ergibt sich eine leistungsstarke Batterie mit einer Anfangsspannung von rund 1200 mV und einigen 10 mW/cm² Leistungsdichte bei ansonsten gleichem Versuchsaufbau.

Messungen des Innenwiderstandes der Anode und damit des Anodenmaterials mit Silizium-Partikeln B 80 Gew.-% und 20 Gew.-% hohe Werte im Bereich von 4 Kilo-Ohm je cm². Die Strombelastung des Anodenmaterials mit Silizium-Partikeln B 20 Gew.-% und 80 Gew.-% Graphit lag bei 100 µA/cm² bei einer Leistungsdichte von max. ca. 0,01 mW/cm².

Das Anodenmaterial wurde dazu feucht mit wässrigem Elektrolyten vermessen.

### Beispiel 2:

Ein zu Beginn innig trocken vermischtes Anodenmaterial mit 20 Gew.-% Silizium-Partikel B und 80 Gew.-% Graphit und danach mit wässriger Elektrolytlösung versetzter Messaufbau einer erfindungsgemäßen Primärzelle zeigt eine Spannung U, die innerhalb von 75 min von ca. 150 mV auf ca. 400 mV anstieg. Bei der daran anschließenden Belastungsprobe [U(I)-Messung] konnten Leistungsdichten von bis zu 0,185 mW/cm² erzielt werden. In der Erholungsphase stieg U innerhalb von 10 min wieder auf den Ausgangwert an und fiel dann nach ca. 90 min langsam wieder ab (ca. 250 mV).

Beispiel 2 legt nahe, dass eine weitere Leistungssteigerung mittels homogenerer Durchmischung sowie mit kleineren Silizium-Partikeln und kleineren Partikeln des Leitfähigkeitsvermittlers erzielt werden können. Bevorzugt ist dabei eine abgestimmte vorzugsweise bimodale Verteilung der Partikelgrößen.

### Verbesserung des Zellenaufbaus:

Die Versuchsbatterien wurden mit Hilfe eines speziell für Batterieversuche konzipierten Montageschraubstockes zusammengesetzt. Zunächst wurden Anoden- und Kathoden-materialien jeweils gründlich im trockenen Zustand gemörsert, um einen guten Kontakt zwischen aktivem Material und Leitfähigkeitsvermittler zu gewährleisten und anschließend jeweils durch Zugabe einer geeigneten Menge Elektrolytflüssigkeit sowie eines Benetzungs- bzw. Netzmittels im Mörser zu einer streichfähigen Paste verrieben. Diese Pasten wurden in den jeweiligen Elektrodenraum hineingestrichen. Als Separator und Regulativ für die Elektrolytflüssigkeit wurde ein benetztes Stück Filtrierpapier verwendet. Die Paste im Anodenraum wurde so glattgestrichen, dass eine leichte Wölbung vorhanden war, so dass sichergestellt war, dass der anschließend mit dem Montageschraubstock erzeugte Anpressdruck vor Allem die Elektrodenpasten komprimierte, so dass ein guter Kontakt zwischen aktivem Material und Leitfähigkeitsvermittler gegeben war. Dass eine hinreichende Leitfähigkeit in den Elektrodenpasten vorlag, konnte dadurch gezeigt werden, dass während einiger Leistungsmessungen der Anpressdruck verändert wurde. Hierbei wurde in keinem Fall eine nennenswerte Leistungs-änderung beobachtet.

Bei allen Versuchsbatterien gingen während der Belastungstests Spannung und Leistung langsam zurück. Während längerer Erholungsphasen ohne Belastung stieg die Spannung jeweils wieder an, erreichte jedoch nicht ganz wieder den Wert vor Beginn der vorhergegangenen Belastungsphase. Das lässt sich auf Änderung des Innenwiderstandes der Elektroden zurückführen, welcher hier durch elektrochemische Vorgänge an den Partikeloberflächen beeinflusst wird.

Bei den Versuchsbatterien wurden U(I)-Kurven aufgenommen. Da während jeder Belastungsstufe, insbesondere bei höherer Belastung, die Spannung sich entsprechend reduzierte, wurden die Messfrequenz erhöht (Messintervalle von 30 Sekunden), womit dann mit dieser Einstellung alle notwendigen Messaufzeichnungen erfolgten.

Für die Belastungsmessungen wurden je nach Leerlaufspannung der Zelle eine Diode, zwei in Serie geschaltete Dioden, eine einzelne Schottky-Diode oder eine Diode mit einer Schottky-Diode in Serie geschaltet als "Last" eingesetzt. Die auf diese Weise gewonnenen Belastungskurven über der Zeit lassen vor allem Rückschlüsse auf die Belastungsfähigkeit bzw. deren Rückgang über längere Zeitperioden zu. Andererseits sind diese Belastungskurven nur sehr eingeschränkt mit den U(I)-Kurven vergleichbar. Für ein tiefergehendes Verständnis sei auf die elektrotechnische Fachliteratur bzw. Empfehlung der Halbleiterhersteller zur Verwendung von Dioden in der Schaltungstechnik verwiesen.

Für eine ausgewählte Demobatterie wurde anhand von Wägungen die Si-Dichte in der Anodenpaste aus 30 Gew.-% Silizium-Partikel **D** und 70 m-% Vulcan-XC72R zu 0,104 g/cm³ bestimmt. Unter Zugrundelegung dieses Wertes wurde für die Demobatterie die theoretische Kapazität berechnet. Sie betrug ca. 1000 As. Demgegenüber betrug der Stromverbrauch während der durchgeführten Belastungsmessungen 20 As, das sind 2 % der theoretischen Kapazität. Das reelle Kapazitätsende der Batterie war hierbei auch nach zwei Wochen Wechselbetrieb noch nicht erreicht.

### Spezifischer Widerstand und Leitfähigkeitsmessungen an Si-C-Anodenmaterialien und MnO₂-C-Kathodenmaterialien

Für die Messung des spezifischen elektrischen Widerstandes wurden die Proben in einem Kunststoffring zwischen zwei Edelstahlkolben (Fläche 5,0 cm²), denen jeweils ein Kupferblech für Stromzufuhr und Spannungsabgriff unter- bzw. aufgelegt war, mit definierter Kraft zusammengepresst. Für jede Kraftstufe wurden Stromstärke, Spannung und der Abstand zwischen den Kupferblechen gemessen. Dieselben Werte wurden auch mit der probenfreien Versuchsanordnung gemessen und die betreffenden ohmschen Widerstände und Blechabstände von den entsprechenden Werten, die mit eingefüllten Proben gemessen wurden, subtrahiert.

Die Ergebnisse der Leitfähigkeitsmessungen sind in den nachfolgend dargestellten

Diagrammen der **Figuren 2**, **3** und **4** graphisch dargestellt.

Dabei bedeuten: y_i: Massenbruch der Komponente i; R_sp: spezifischer Widerstand [Ω*cm].

Ein spezifischer Widerstand von 1 Ω*cm entspricht bei der Schichtdicke von 0,2 cm in den Versuchsbatterien und einer Stromdichte von 10 mA/cm² einem durch den ohmschen Widerstand der betreffenden Elektrodenpaste verursachten Spannungsabfall von im ungünstigsten Fall 2 mV.

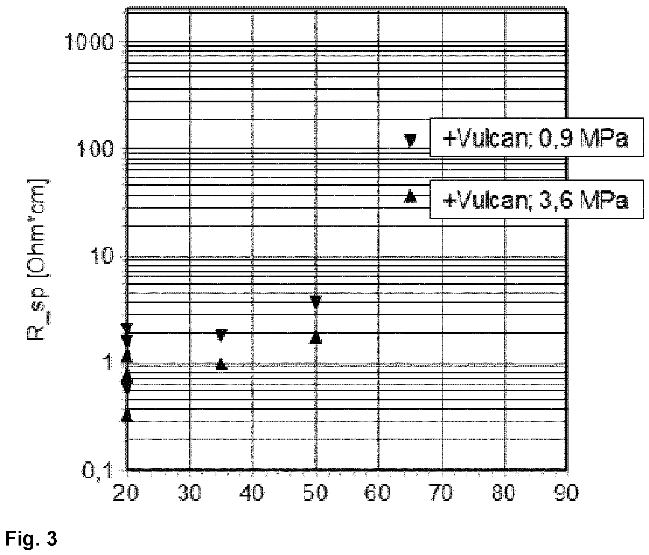

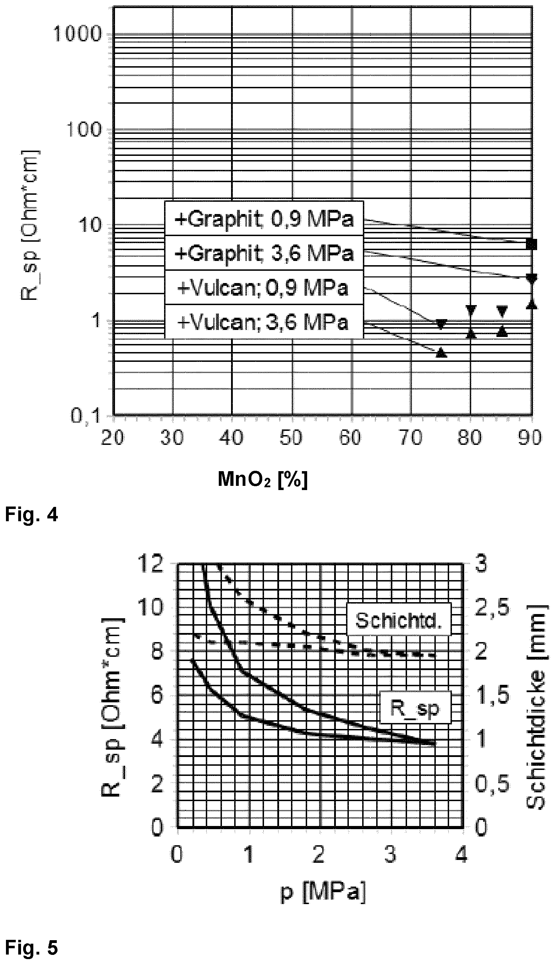

Den Figuren **2****,** **3** und **4** (Fig. 2: Silizium-Partikel B [Gew.-%], Fig. 3: Silizium-Partikel D [Gew.-%], Fig. 4: Mn₂O [Gew.-%]) ist zu entnehmen, dass sowohl für das Anodenmaterial als auch für das Kathodenmaterial bei gleichem Massenanteil durch Verwendung von Vulcan-XC72R-Ruß eine erheblich größere Leitfähigkeit erzielt wird gegenüber Graphit als alternativen Leitfähigkeitsvermittler.

Die Leitfähigkeiten hängen bei Beiden vom Anpressdruck ab. Die für 0,9 MPa angegebenen Werte für den spezifischen Widerstand wurden während der Messphase mit schrittweiser Druckerhöhung gemessen. Bei Rücknahme des Druckes zeigt der Verlauf des spezifischen Widerstandes, wie auch der Verlauf der Schichtdicke, eine ausgeprägte Hysterese. Ein typisches Beispiel ist in Figur **5** dargestellt und illustriert den Einfluss sowohl des Anpressdruckes als auch der Historie des Anpressdruckes auf den Innenwiderstand der Versuchszelle. **Figur 5** zeigt die Hysterese des spezifischen Innenwiderstandes (Messung der spezifischen Leitfähigkeit über Druck, p [MPa] in Bezug zur Schichtdicke [mm]) am Beispiel der Si-C-Anodenpaste bestehend aus 50 Gew.-% Siliziumpartikel **A** und 50 Gew.-% Vulcan-XC72R in Abhängigkeit vom Anpressdruck auf die Elektroden.

Die Leitfähigkeiten der reinen Si-Pulver sind bei Raumtemperatur sehr gering, Bei Messungen mit höherer Spannung zeigt sich jedoch ein verändertes Verhalten, was einerseits auf nicht vermeidbare Oxidschichten auf der Silizium-Partikeloberfläche und andererseits auf die Reinheiten des Siliziums zurückzuführen ist.

**Tabelle 3: Si-Partikel Leitfähigkeiten und Druck**

| Si-Partikel | Leitfähigkeit 3,6 MPa | Leitfähigkeit 0,9 MPa |
|---|---|---|
| D | < 0,5 nS/cm | < 0,5 nS/cm |
| B | < 2 nS/cm | < 0,5 nS/cm |
| A | < 0,5 nS/cm | < 0,5 nS/cm |
| C | 1 mS/cm | 0,03 mS/cm |

### Vorversuche zur Charakterisierung der Beispiel 3 Versuchszelle mit Silizium-Partikeln B und modifizierter NH₄Cl-Lösung

Es wurde zuerst die Beständigkeit des Siliziummaterials B gegen unterschiedliche wässrige Elektrolytlösungen getestet um danach den Zusatz bzw. die Zusätze auszuwählen. Die Versuche zeigen, dass die Silizium-Partikel B beständig gegen Wasser und gegen konzentrierte Lösungen von NH₄Cl, NaCl oder Zitronensäure (keine Gasentwicklung erkennbar) sind, eingeschränkt beständig gegen verdünnte Lösungen von Na₂CO₃ (Gasentwicklung feststellbar; Probe nach einigen Tagen nicht vollständig umgesetzt), und unbeständig gegen konzentrierte Lösungen von KOH oder Na₂CO₃ (starke bzw. erhebliche Gasentwicklung; Probe löst sich innerhalb weniger Minuten bzw. mehrerer Tage vollständig). Als Kathodenmaterial wurde hier ein Gemisch aus 90 Gew.-% MnO₂ und 10 Gew.-% Graphitpulver eingesetzt. Sowohl mit dem zunächst eingesetzten MnO₂ (p.a.) als auch mit dem anschließend verwendeten MnO₂ (gefällt, aktiviert) und MnO₂, (battery grade) wurden mit Zinkbasierten Vergleichszellen gute Leistungen erzielt, so dass keine dieser MnO₂-Qualitäten als Ursache für eine geringe Leistungsfähigkeit in Frage kommen. Quelle für das verwendete MnO₂ vom Typ HH-P ist die Firma Tosoh Hyuga Corporation, JP.

Aufgrund der Erwartung, dass mit Hilfe alkalischer Elektrolyte eine verbesserte Leistung erreichbar sein sollte, wurden Versuche mit Na₂CO₃-haltigen NH₄Cl-Lösungen durchgeführt.

**Beispiel 3** beschreibt nun die Versuchszelle mit Silizium-Partikeln B und mit Na₂CO₃-Zusätzen modifizierter NH₄Cl-Lösung (Elektrolyt).

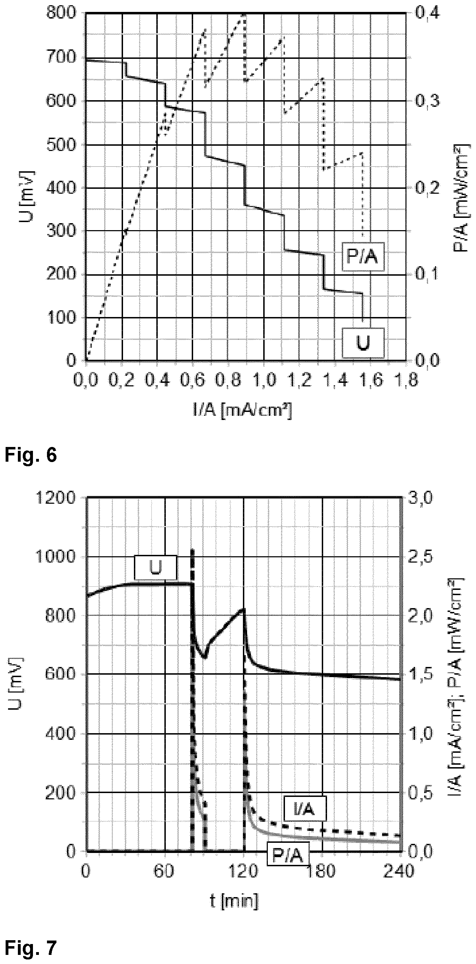

Hierzu zeigt **Figur 6** die U(I)- und P/A(I)-Kennlinien der Versuchszelle (Ref. 160118; Anodenmaterial: 20 Gew.-% Silizium-Partikel B + Graphit, Elektrolyt: 18 Gew.-% NH₄Cl und 2 Gew.-% Na₂CO₃ in H₂O, Kathodenmaterial: 90 Gew.-% MnO₂, gefällt, aktiv + Graphit; y-Achse: U [mV] oder P/A [mW/cm²], x-Achse: I/A [mA/cm²] Definition: mV = Millivolt = 10⁻³ Volt; mW = Milliwatt = 10⁻³ Watt; mA = Milliampere = 10⁻³ Ampere).

Mit diesem schwach alkalisierten Elektrolyten konnte die Leistungsfähigkeit deutlich verbessert werden, was im Wesentlichen auf eine entsprechend höhere Zellspannung (U0 = ca. 700 mV) zurückzuführen ist.

**Beispiel 4** beschreibt nun die Versuchszelle mit Silizium-Partikeln B und mit Na₂CO₃-Zusätzen modifizierter NH₄Cl-Lösung (Elektrolyt), bei dem mit einem stärker alkalisierten Elektrolyten (15 Gew.-% NH₄Cl + 5 Gew.-% Na₂CO₃) gearbeitet wurde: Leerlaufpotential, Zellspannung mit U0 < 500 mV sowie die spezifische Zellleistung in mW/cm2 gingen deutlich zurück.

**Beispiel 5** beschreibt die Versuchszelle aus Beispiel 2 wobei das Elektrodenmaterial Graphit durch das alternative Elektrodenmaterial Ruß (Vulca-XC72R) ersetzt wurde.

Anodenmaterial: 30 Gew.-% Silizium-Partikel D im Gemisch mit 70 Gew-% Ruß Vulcan-XC72R. Diese Primärzelle wurde mit 25 Gew.-% NH₄Cl in H₂O als Elektrolyt aktiviert und wies eine Anfangsspannung U0 von rund 1 V auf.

**Beispiel 6** beschreibt eine Versuchszelle analog zu Beispiel 3 wobei das Elektrodenmaterial Graphit durch das alternative Elektrodenmaterial Ruß (Vulca-XC72R) ersetzt wurde sowie eine mit Na₂CO₃-Zusätzen modifizierte NH₄Cl-Lösung (Elektrolyt) verwendet wurde. Mit diesem stärker alkalisierten Elektrolyten (15 Gew.-% NH₄Cl + 5 Gew.-% Na₂CO₃) wurde ein Leerlaufpotential U0 von ca. 650 mV bei vergleichsweise reduzierten Strom- und Leistungsdichten erreicht.

Es wurden auch fluoridhaltige Elektrolyte in der Silizium-Partikel Primärzelle getestet. Das nachfolgende **Beispiel 7** beschreibt eine Versuchszelle mit fluoridhaltiger wässriger Elektrolytlösung.

Zur Herstellung konzentrierter wässriger Fluoridlösungen wurden die Salze KF und NH₄F aufgrund ihrer Löslichkeit in Wasser ausgewählt. In den nachfolgenden Versuchen wurde NH₄F verwendet. Die wässrigen KF-Lösungen weisen in etwa einen pH-Wert von 8 bis 9, wie die unter dem Beispiel 6 vermessene Lösung auf, während der pH-Wert einer NH₄F-Lösung etwa 6 beträgt. Um den Umfang möglicher Korrosionsprozesse bewerten zu können, wurde konzentrierte NH₄F-Lösung zuerst verwendet, wobei der Elektrolyt unter merklicher Gasentwicklung mit den Si-Partikeln reagiert, so dass statt dessen ein modifiziertes Elektrolytsystem erprobt wird, das nur ein wenig lösliches Fluorid in vorwiegend fester Form enthält, so dass verbrauchtes Fluorid durch das Lösen einer entsprechenden Menge des festen Fluorids ersetzt werden kann. Als geeignetes Fluorid wurde zunächst MnF₂ (Löslichkeit in H₂O ca. 10 g/L) gewählt. Ist zusätzlich eine hohe Konzentration gelöstes MnCl₂ vorhanden, ändert sich die Mn²⁺-Konzentration nur wenig mit der verbrauchten F⁻-Menge, so dass angenommen wird, dass aufgrund des MnF₂-Löslichkeitsprodukts die F⁻-Konzentration ebenfalls annähernd konstant bleibt. Der angesetzte, im Folgenden als MnF₂-Elektrolyt bezeichnete Elektrolyt enthielt im Wesentlichen (wobei gelöstes MnF₂ vernachlässigt): MnF₂ (fest): ca. 0,5 mol/kg; Mn²⁺: ca. 1,9 mol/kg; NH₄⁺: ca. 2,5 mol/kg; Cl⁻: ca. 6,3 mol/kg

Damit wurde die Versuchsbatterie nach **Beispiel 7** mit dem gegen Fluoride beständigeren Silizium-Partikeln **B** montiert. Diese Batterie konnte gemäß Figur 7 eine um Faktor 10 verbesserte Leistung gegenüber den vorherigen Beispielen 1 bis 6 generieren (y-Achse: U [mV] oder I/A [mA/cm²]; P/A [mW/cm²], x-Achse: t [min]). Das Leerlaufpotential (Anfangsspannung) U0 war mit ca. 0,9 V vergleichsweise hoch. Figur 7 zeigt das Belastungsdiagramm dieser Primärzelle (Anodenmaterial: 30 Gew.-% Silizium-Partikel B + Vulcan-XC72R, Elektrolyt: MnF2-Elektrolyt, Kathodenmaterial: 90 Gew.-% MnO₂, von Tosoh in Graphitpulver).

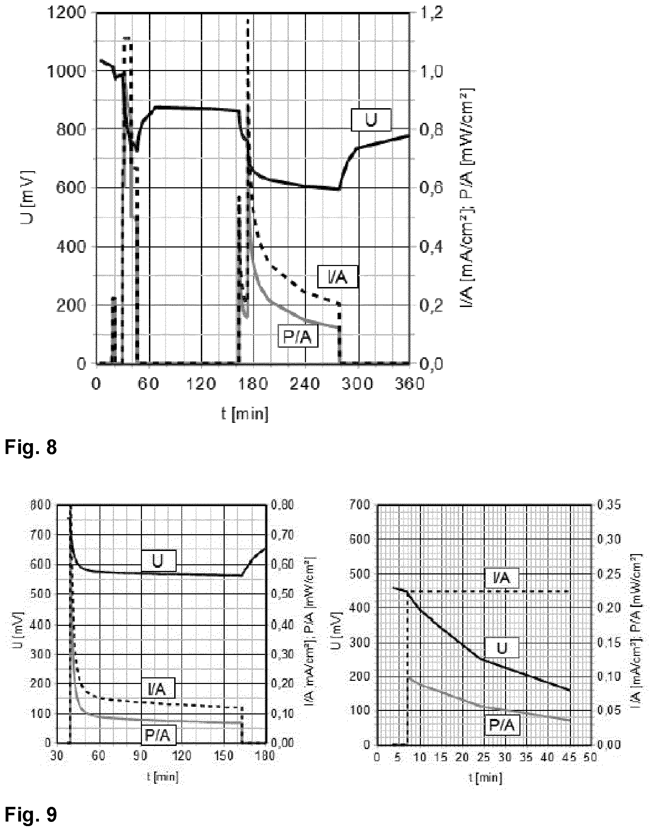

**Beispiel 8** umfasst eine Batteriezelle mit dem aktiveren Silizium-Partikel D: Damit konnte eine Leerlaufspannung U0 von knapp über 1 V erzielt werden. Die Zelle nach Beispiel 8 zeigte eine ähnliche Leistungsfähigkeit (Fig. 8 und 9) wie die ansonsten identisch aufgebaute Batteriezelle mit Silizium-Partikeln B. **Figur 8** zeigt die Meßkurve als Belastungsdiagramm wobei diese Primärzelle folgende Zusammensetzung aufweist: Anodenmaterial: 30 Gew.-% Silizium-Partikel D + Vulcan-XC72R, Elektrolyt: MnF2-Elektrolyt, Kathodenmaterial: 90 Gew.-% MnO₂, von Tosoh in Graphitpulver; (y-Achse: U [mV] oder I/A [mA/cm²]; P/A [mW/cm²], x-Achse: t [min]), **Figur 9** zeigt weitere Belastungsdiagramme dieser Primärzelle nach einem Tag (links) und weiteren 3 Tagen (rechts) mit einer Erholungsphase ohne Belastung dazwischen (y-Achse: U [mv] oder I/A [mA/cm²]; P/A [mW/cm²], x-Achse: t [min]). Die Leistung dieser Primärzelle ist ausreichend einen Niedervolt-Elektromotor mit Propeller in rasche Drehung zu versetzen.

**Beispiel 9** umfasst ein Batteriesystem bestehend aus zwei in Serie geschalteten Primärzellen die mit gleichem Material aufgebaut wurden wie in Beispiel 8 beschrieben. Deren aktiven Elektrodenflächen betragen 16 cm², was ausreicht einen mittleren Gesamtstrom von rund 20 mA bereitzustellen um somit einen Motor mit aufgesetztem Lüfter anzutreiben. Der MnF₂-Elektrolyt wurde in Abweichung zu Beispiel 8 mit der halben Menge 25-%iger NH₄Cl-Lösung versetzt, so dass die F⁻-Konzentration im Elektrolyten aufgrund der geringeren Mn²⁺-Konzentration theoretisch etwas höher liegen kann als im Elektrolyten gemäß Beispiel 8. Es wurden zu Beginn Ströme von ca. 40 mA bis 50 mA gemessen.

Das Batterievolumen beträgt lediglich ca. 20 cm³, also kaum mehr als das Volumen von zwei Mignonzellen. Nach einer Woche, in der noch einige weitere Belastungstests vorgenommen wurden, konnte bei der Aufnahme einer U(I)-Kennlinie noch eine Leistungsdichte von mehr als 3 mW/cm² gemessen werden. Völlig überraschend belegt diese lange Lebensdauer der Zelle, dass sich bei diesem Elektrolytsystem die Korrosion des Anodenmaterials der Zelle erheblich reduziert hat.

**Beispiel 10 umfasst eine Versuchszelle mit einem nichtwässrigen Elektrolyten (ionische Flüssigkeit).** Nichtwässrige Elektrolyten sind z.B. ionische Flüssigkeit, die nach Literaturangaben hergestellt werden können: das Ethyl-Methyl-Imidazolium-Kationen (Abkürzung: "EMIM") und Fluorid-Anionen mit jeweils entweder 2 oder 3 durch Wasserstoffbrücken angelagerten HF-Molekülen.#

Ein weiterer nicht wässriger Elektrolyt ist z.B. Ethyl-Methyl-Imidazolium-Tetrafluoroborat, der zusätzlich mit festem NH₄F versetzt wurde. In der Versuchszelle nach Beispiel 10 umfasst das Anodenmaterial Silizium-Partikel D in einer Kohlenstoffmatrix. Die Leerlaufspannung U0 dieser Primärzelle erreicht knapp 1,2 V und damit nahezu den theoretischen Wert, der für eine einzelne Silizium-Primärzelle dieser Geometrie gemessen wurde. Die Leistungsfähigkeit der Zelle war etwas kleiner als die Zelle gemäß Beispiel 9 bzw. besser als die der anderen getesteten Batteriezellen.

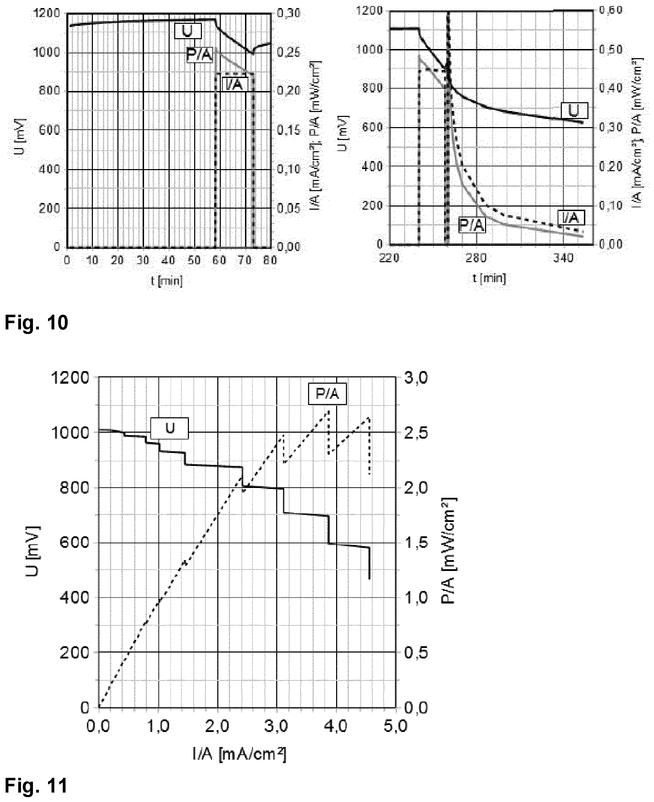

Figur 10 zeigt das Belastungsdiagramm der Zelle wobei links die Abbildung den 1. Versuchsabschnitt, die zweite Abbildung rechts den 2. Versuchsabschnitt dokumentiert (y-Achse: U [mV] oder I/A [mA/cm²]; P/A [mW/cm²], x-Achse: t [min]). Die Belastungsdiagramme der Primärzelle (Anodenmaterial: 30 Gew.-% Silizium-Partikel D + Vulcan-XC72R, Elektrolyt: EMIM-BF₄ (mit eventuell in geringer Konzentration gelöstem NH₄F), Kathodenmaterial: 90 Gew.-% MnO₂ von Tosoh mit Graphit).

In **Beispiel 11** wurden Silizium-Partikel A und ein wässriger NaCI-NaF-Elektrolyt verwendet. Zur Modifikation wurde als weitere Elektrolytkomponente mit begrenzter Fluoridionenkonzentration eine wässrige Lösung mit z.T. gefälltem, z.T. gelöstem NaF erprobt. Die Löslichkeit von NaF in Wasser beträgt etwa 50 g/L (bezogen auf das Volumen des reinen Lösemittels). Um die Fluoridionenkonzentration möglichst gering zu halten, wurde eine hohe Na-Konzentration angestrebt. Die Elektrolytlösung wurde hergestellt durch Zugabe von 2,5 g einer wässrigen Lösung mit 40 Gew.-% NH₄F zu 25 g einer gesättigten NaCI-Lösung, wobei festes NaF als relativ feinkristalline Trübe ausfällt. Zur Verbesserung der Benetzungsfähigkeit für Silizium und Elektroruß wurden zusätzlich 2 mL eines verdünnten Netzmittel umfassend Polyethers beigefügt. Die Kathode besteht analog zu den anderen Beispielen zu 90 Gew.-% aus MnO₂ von Tosoh sowie 10 Gew-% Graphitpulver. Wie bei allen Versuchen wurde als Separator ein Flies verwendet.

Für das Beispiel 11 mit dem Anodenmaterial Silizium-Partikel A zeigt Figur 11 (y-Achse: U [mV] oder P/A [mW/cm²], x-Achse: I/A [mA/cm²]) das entsprechende Belastungsdiagramm der Primärzelle Beispiel 11 mit Anodenmaterial bestehend aus 30 Gew.-% Silizium-Partikel A + 70 Gew-% Vulcan-XC72R, Elektrolyt: NaCI-NaF-Elektrolyt, Katode zu 90 Gew.-% aus MnO₂ von Tosoh sowie 10 Gew-% Graphitpulver; als Separator wurde ein Flies verwendet. Das Belastungsdiagramm zeigt eine sehr gute Performance und Leistungsanpassung bei einer Lastspannung UL von 0,8 Volt.

Durch gezielte Variationen, vor Allem der Elektrolytzusammensetzung, konnte die Leistungsfähigkeit der Silizium-Primärzellen im Verlauf der Versuche etwa um den Faktor 20 gesteigert werden. Die leistungsfähigste Silizium Primärzelle unterscheidet sich in der Anfangsleistung noch lediglich um gut eine Größenordnung von den vergleichsweise mit gleichem Versuchsaufbau vermessenen Zn-Batterien. Hierbei ist zu berücksichtigen, dass die Zn-Menge in den Zn-Batterien ein Mehrfaches der Si-Menge in den Silizium Primärzellen (ca. 8-mal größere theoretische Batteriekapazität) umfasst. Zwar ist die spezifische Oberfläche der vergleichsweisen groben Zn-Partikeln wesentlich kleiner als die der Silizium-Partikel, dabei ist aber zu berücksichtigen dass mit der 8-fachen Menge an Silizumpulver auch die Stromdichte zunimmt und damit vergleichbar zur Zn-Zelle wird.

**Löslichkeit ausgewählter Fluoride in Wasser (bei Temp. in °C) in g/L Wasser: CaF₂:** 0,015 (20); MgF₂: 0,13; SrF₂: 0,12 (25); BaF₂: 1,2 (25); LiF: 2,7 (20); MnF₂: 10; CoF₂: 14,2 (25); ZnF₂: 15 (20) (ZnF₂*4H₂O); NiF₂: 25,6 (25); NaF: 42,2 (20); CuF₂: 47 (20); KF: 485 (20); NH₄F: 820 (20); RbF: 1306 (18); AgF 1850 (15,5); CsF 3670 (18)

**Gemessene Schüttdichten in g/mL (**Silizium-Partikel B: 0,114; 0,110; Silizium-Partikel D: 0,027; 0,024; Silizium-Partikel A: 0,039; 0,039; Vulcan-XC72R: 0,080; Graphit: 0,30; 30 Gew.-% Silizium-Partikel D + Vulcan-XC72R 0,053; 0,053; 0,053; 30 Gew.-% Silizium-Partikel A + Vulcan-XC72R 0,064; 0,064; Zn-Staub "ZP001", battery grade 4,08)

## Patentansprüche

1. Elektrochemische Primärzelle aufweisend eine Anode, eine Kathode, einen Elektrolyten sowie mindestens einen Separator, wobei der Separator die Kathode und die Anode voneinander separiert, und die Kathode umfasst als Material Mangandioxid und optional Kohlenstoff enthaltenden Leitfähigkeitsvermittler, **dadurch gekennzeichnet, dass** die Anode als Anodenmaterial Silizium umfasst, wobei das Silizium in Form von Silizium-Partikeln vorliegt, die Silizium-Primärpartikel mit einer Partikelgröße zwischen 1 nm bis 3000 nm aufweisen, und die Silizium-Primärpartikel optional im Wesentlichen amorph sind.

2. Primärzelle nach Anspruch 1, **dadurch gekennzeichnet, dass**
a) das Material der Kathode der Primärzelle Mangandioxid als Kathodenmaterial umfasst, wobei insbesondere das Kathodenmaterial als Kathode in einem hermetisch abgeschlossenen Batteriegehäuse vorliegt, oder
b) die Kathode der Primärzelle eine Luftkathode ist und die Kathode als Material ein Manganoxid, insbesondere Manganoxid und/oder Mangandioxid, Platin, Platin-Basis, Silber einzeln odergemeinsam als Katalysator umfasst.

3. Primärzelle nach Anspruch 1 oder 2, **dadurch gekennzeichnet, dass** die Silizium-Partikel in Form von Agglomeraten von Silizium-Primärpartikeln, Aggregaten von Silizium-Primärpartikeln oder Gemischen dieser Agglomerate und Aggregate vorliegen und die Agglomerate und/oder Aggregate eine Größe von 100 bis 3000 nm aufweisen.

4. Primärzelle nach einem der Ansprüche 1 bis 3, **dadurch gekennzeichnet, dass** der Elektrolyt ausgewählt ist aus
a) einer wässrigen, alkalische Salze enthaltenden fluiden Zusammensetzung,
b) einer wässrigen oder nicht-wässrigen Fluorid-Anionen enthaltenden fluiden Zusammensetzung,
c) einer wässrigen Fluorid-Anionen enthaltenden Zusammensetzung mit einem Gehalt an ungelöstem Fluorid, insbesondere umfasst die Zusammensetzung mindestens ein Salz ausgewählt aus MnF₂, NH₄F und/oder KF, oder
d) einer nicht wässrigen Fluorid-Anionen enthaltenden Zusammensetzung umfassend mindestens eine ionische Flüssigkeit optional in Gegenwart von weiteren Salzen von Fluorid-Anionen.

5. Primärzelle nach einem der Ansprüche 1 bis 4, **dadurch gekennzeichnet, dass** der Elektrolyt anorganische Salze umfasst und einen pH-Wert von 2 bis 9,5 aufweist und optional einen Puffer und/oder ein Puffersystem enthält.

6. Primärzelle nach einem der Ansprüche 1 bis 5, **dadurch gekennzeichnet, dass** der Elektrolyt eine wässrige Hydroxid-Anionen, Carbonat-Anionen oder Halogenid-Anionen, insbesondere Fluorid-Anionen und/oder Chlorid-Anionen enthaltende Zusammensetzung ist.

7. Primärzelle nach einem der Ansprüche 1 bis 6, **dadurch gekennzeichnet, dass** der wässrige Elektrolyt mindestens ein Salz ausgewählt aus Mangandifluorid, Mangandichlorid, Ammoniumfluorid, Kaliumhydroxid, Natriumhydroxid, Ammoniumchlorid, Natriumchlorid, Natriumfluorid, Kaliumfluorid und/oder Salz einer Carbonsäure umfasst.

8. Primärzelle nach einem der Ansprüche 1 bis 7, **dadurch gekennzeichnet, dass** der Elektrolyt Mangandifluorid, Mangandichlorid und/oder Ammoniumfluorid und optional Kaliumfluorid enthält.

9. Primärzelle nach einem der Ansprüche 1 bis 8, **dadurch gekennzeichnet, dass** das Material der Kathode zu 70 bis 95 Gew.-% als Kathodenmaterial Mangandioxid umfasst und auf 100 Gew.-% des Kathodenmaterials einen Kohlenstoff enthaltenden Leitfähigkeitsvermittler und optional weitere Additive umfasst, insbesondere umfasst die Kathode als Leitfähigkeitsvermittler Kohlenstoff enthaltende Partikel oder eine Kohlenstoff enthaltende Paste.

10. Primärzelle nach einem der Ansprüche 1 bis 9, **dadurch gekennzeichnet, dass** das Anodenmaterial Silizium-Partikel sowie Leitfähigkeitsvermittler umfasst, insbesondere umfasst der Leitfähigkeitsvermittler Kohlenstoff enthaltende Partikel oder eine Kohlenstoff enthaltende Paste.

11. Primärzelle nach einem der Ansprüche 1 bis 10, **dadurch gekennzeichnet, dass**
i) die Kohlenstoff enthaltenden Partikel umfassen Ruß, Leit-Ruß, elektrochemisch hergestellten Ruß, Graphit, Graphen und/oder
ii) die Kohlenstoff enthaltende Paste elektrisch leitfähige Polymere und/oder Graphen als Kohlenstoff enthaltenden Leitfähigkeitsvermittler aufweist.

12. Primärzelle nach einem der Ansprüche 1 bis 11, **dadurch gekennzeichnet, dass** das Silizium des Anodenmaterials Dotierstoffe umfasst, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon und optional ausgewählt sind aus Elementen der Eisengruppe.

13. Primärzelle nach einem der Ansprüche 1 bis 12, **dadurch gekennzeichnet, dass** das Silizium des Anodenmaterials Dotierstoffe umfasst, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen.

14. Primärzelle nach einem der Ansprüche 1 bis 13, **dadurch gekennzeichnet, dass** der Elektrolyt ein Netzmittel umfasst, insbesondere umfasst das Netzmittel Tenside, wie anionische Tenside, kationische Tenside, amphotere Tenside, organische Lösemittel, wie Alkohol, Keton, Ether, Polyether, wie Polyethylenoxid und/oder Polypropylenoxid.

15. Mehrzellige Batterie, **dadurch gekennzeichnet, dass** die Batterie mindestens zwei bis 15.000 mit einander verbundene Primärzellen nach einem der Ansprüche 1 bis 14 umfasst, vorzugsweise sind die zwei bis 15.000 mit einander verbundenen Primärzellen in Serie geschaltet.

16. Verwendung von Silizium als Anodenmaterial in Form von Silizium-Partikeln, die als Silizium-Primärpartikel mit einer Partikelgröße zwischen 1 nm bis 3000 nm vorliegen und das Anodenmaterial im geladenen Zustand kein Lithium umfasst, insbesondere bilden die Silizium-Primärpartikel Agglomerate und/oder Aggregate Gemische dieser, wobei die Silizium-Primärpartikel optional im Wesentlichen amorph sind.
